# EUROPÄISCHE PATENTSCHRIFT

(11) **EP 1 092 696 B1**
(45) Veröffentlichungstag und Bekanntmachung des Hinweises auf die Patenterteilung: **04.02.2004**
(21) Anmeldenummer: 00117042.2
(22) Anmeldetag: 09.08.2000
(51) Int. Cl.: C04B 37/00, H05B 3/14, H05B 3/18, F23Q 7/00

(54) **Gesinterter keramischer Verbundkörper**
Sintered ceramic composite body
Corps composite en céramique frittée

(30) Priorität: 15.10.1999 DE 19949823
(43) Veröffentlichungstag der Anmeldung: 18.04.2001
(73) Patentinhaber: ROBERT BOSCH GMBH, 70442 Stuttgart (DE)
(72) Erfinder: Lindemann, Gert, 72805 Lichtenstein (DE); Lindner, Friederike, 70839 Gerlingen (DE); Rau, Christof, 70569 Stuttgart (DE); Knoll, Guenter, 70195 Stuttgart (DE)

(56) Entgegenhaltungen:
- DE-A- 3 519 437
- DE-A- 3 734 274

## Beschreibung

Die Erfindung betrifft einen gesinterten keramischen Verbundkörper, insbesondere ein Heizelement, mit einem keramischen Verbundgefüge, nach der Gattung des Hauptanspruchs.

### Stand der Technik

Komposite aus elektrisch isolierendem Siliziumnitrid (Si₃N₄) und elektrisch leitfähigem Molybdändisilizid (MoSi₂) sind zur Verwendung als Material für keramische Heizer, z.B. in Glühstiftkerzen und Sonden-Heizern, vielfach bekannt. Dazu siehe beispielsweise die Anmeldungen DE 199 40 668.5 und DE-A-3734274.

Weiter ist bekannt, in Abhängigkeit von dem Mischungsverhältnis von Siliziumnitrid und Molybdändisilizid elektrisch leitende oder elektrisch isolierende Mischungen herzustellen und diese Mischungen zu einem keramischen Verbundgefüge zusammenzusintern, das beispielsweise als glühstabiler Heizer verwendet werden kann.

Derartige Verbundgefüge sind einerseits sehr gut oxidationsbeständig, insbesondere hinsichtlich der Vermeidung der sogenannten "Molybdändisilizid-Pest" im kritischen Temperaturbereich von 500°C bis 800°C, und weisen eine gute Thermoschockbeständigkeit, eine hohe Festigkeit und eine günstige Verfügbarkeit der erforderlichen Rohstoffe auf.

Bei der Herstellung eines keramischen Verbundgefüges, das aus mindestens zwei Bereichen mit unterschiedlicher Zusammensetzung besteht, beispielsweise aus einem Leitbereich und einem Isolierbereich, wobei der Leitbereich einen höheren Molybdändisilizidanteil als der Isolierbereich aufweist, tritt jedoch bei Betrieb oder Herstellung eines dieses keramische Verbundgefüge aufweisenden keramischen Verbundkörpers, beispielsweise einer Glühstiftkerze, das Problem auf, daß der Wärmeausdehnungskoeffizient (WAK) von Siliziumnitrid (α = 3,1*10⁻⁶ 1/K) und Molybdändisilizid (α = 8,5*10⁻⁶ 1/K) sehr unterschiedlich ist, so daß es leicht zu Spannungen innerhalb des keramischen Verbundkörpers beim Erwärmen oder Abkühlen kommt, was letztendlich zu dessen Versagen durch Rißbildung, Verformung oder ähnliches führen kann.

Um die Differenz des Wärmeausdehnungskoeffizienten zwischen einem Leitbereich und einem Isolierbereich zu vermindern, wobei Leitbereich und Isolierbereich jeweils ganz oder teilweise aus Siliziumnitrid und Molybdändisilizid bestehen, ist bereits bekannt, dem keramischen Rohmaterial zur Herstellung des keramischen Verbundgefüges Aluminiumnitrid (α = 5,5*10⁻⁶ 1/K) und Siliziumcarbid (α = 4,8*10⁻⁶ 1/K) zuzusetzen. Dazu sei beispielsweise auf die Patentschriften US 5,801,361, US 5,281,565 oder US 5,085,804 verwiesen.

Der Einsatz von Aluminiumnitrid oder Siliziumcarbid erfordert jedoch aufgrund der im Vergleich zu Molybdändisilizid relativ kleinen Wärmeausdehnungskoeffizienten von Aluminiumnitrid und Siliziumcarbid einen relativ großen Anteil dieser Substanzen, beispielsweise in einem Isolierbereich, um eine Anhebung des Wärmeausdehnungskoeffizienten des Isolierbereiches auf den Wert des Leitbereiches zu erreichen. Damit verbunden ist zwangsläufig eine Verschlechterung der Hochtemperatureigenschaften des keramischen Verbundgefüges, was darauf zurückzuführen ist, daß sich beispielsweise bei Zugabe von Aluminiumnitrid zu Siliziumnitrid nicht hochtemperaturstabile Verbindungen der Art SiAlOₓN_{y} bilden, oder daß es aufgrund der Halbleitereigenschaften von Siliziumcarbid zu einer unerwünschten Änderung der elektrischen Eigenschaften in dem Isolierbereich kommt.

Aufgabe der vorliegenden Erfindung ist es, einen gesinterten keramischen Verbundkörper auf Basis von Siliziumnitrid/Molybdändisilizid herzustellen, der ein keramisches Verbundgefüge mit mindestens einem Leitbereich und mindestens einem Isolierbereich aufweist, wobei der Wärmeausdehnungskoeffizient des keramischen Rohmaterials in dem Isolierbereich und/oder dem Leitbereich unabhängig voneinander über einen weiten Bereich eingestellt werden kann, ohne daß die positiven Eigenschaften des Siliziumnitrid/Molydändisilizid-Verbundgefüges verloren gehen.

### Vorteile der Erfindung

Der erfindungsgemäße, gesinterte keramische Verbundkörper hat gegenüber dem Stand der Technik den Vorteil, daß damit über einen weiten Temperaturbereich, der von 20°C bis über 1300°C reicht, eine Anpassung des Wärmeausdehnungskoeffizienten in dem keramischen Verbundkörper ermöglicht wird. Somit ist der hergestellte, gesinterte keramische Verbundkörper wesentlich temperaturstabiler und temperaturschockbeständiger als bisher bekannte Materialien. Durch die Anpassung des Wärmeausdehnungskoeffizienten werden weiter Spannungen innerhalb des Verbundkörpers minimiert, so daß eine bei späterem Betrieb oder beim Sintern auftretende Rißbildung weitgehend vermieden werden kann.

Durch die erfindungsgemäße Zugabe von Zirkondioxid und/oder Hafniumdioxid, dessen Wärmeausdehnungskoeffizienten gegenüber Molybdändisilizid und Siliziumnitrid besonders hoch sind, ergeben sich selbst bei geringem Anteil von Zirkondioxid und/oder Hafniumdioxid in dem keramischen Verbundgefüge deutliche Änderungen des Wärmeausdehnungskoeffizienten. Gleichzeitig werden die guten Sintereigenschaften von Siliziumnitrid und Molybdändisilizid durch die erfindungsgemäße Zugabe von Zirkondioxid und/oder Hafniumdioxid bewahrt.

Im übrigen ist der erhaltene keramische Verbundkörper sehr oxidationsbeständig, und der spezifische elektrische Widerstand des keramischen Verbundkörpers bleibt auch durch die Zugabe von Zirkondioxid und/oder Hafniumdioxid weitgehend unverändert.

Vorteilhafte Weiterbildungen der Erfindung ergeben sich aus den in den Unteransprüchen genannten Maßnahmen.

So ist es besonders vorteilhaft, wenn das keramische Rohmaterial des Leitbereiches und/oder des Isolierbereiches pulverförmig ist oder in Form einer an sich bekannten metallorganischen Precursorsubstanz vorliegt, wobei dem keramischen Rohmaterial vorteilhaft Zirkondioxid und/oder Hafniumdioxid in einer Menge von 5 bis 35 Gew.%, insbesondere weniger als 20 Gew.%, zugesetzt wird.

Auf diese Weise wird eine Verschlechterung der elektrischen Eigenschaften des erhaltenen Verbundkörpers vermieden, und es bleiben die guten Eigenschaften eines reinen Siliziumnitrid/Molybdändisizilid-Komposites erhalten.

Der entstehende gesinterte keramische Verbundkörper weist vorteilhaft weiter eine typische Dichte auf, die größer als 93 %, insbesondere größer als 94 %, der theoretisch erreichbaren Dichte des keramischen Verbundkörpers ist.

Ganz besonders vorteilhaft ist, wenn dem für den Isolierbereich verwendeten keramischen Rohmaterial Zirkondioxid und/oder Hafniumdioxid zugesetzt wird, da der Isolierbereich einen gegenüber dem Leitbereich erhöhten Anteil von Siliziumnitrid aufweist und der Wärmeausdehnungskoeffizient von Siliziumnitrid deutlich kleiner ist als der Wärmeausdehnungskoeffizient von Molybdändisilizid. Auf diese Weise wird erreicht, daß sich der Wärmeausdehnungskoeffizient der Isolierschicht durch die Zugabe von Zirkondioxid und/oder Hafniumdioxid an den Wärmeausdehnungskoeffizienten der Leitschicht annähert.

Zudem ist es damit vorteilhaft möglich, das keramische Rohmaterial des Leitbereiches unverändert in der bekannten Zusammensetzung aus Molybdändisilizid und Siliziumnitrid herzustellen, und dem keramischen Rohmaterial des Leitbereiches insbesondere kein Zirkondioxid oder Hafniumdioxid zuzusetzen.

Weiterhin ist es vorteilhaft, wenn die Korngröße des eingesetzten Zirkondioxidpulvers und/oder Hafniumdioxidpulvers kleiner ist, als die Korngröße des eingesetzten Siliziumnitrid- und Molybdändisilizid-Pulvers. Auf diese Weise wird vermieden, daß Mikrorisse in dem keramischen Verbundgefüge in der Umgebung der zugesetzten Zirkondioxid- oder Hafniumdioxid-Pulverkörner entstehen.

In diesem Zusammenhang hat sich als besonders vorteilhaft herausgestellt, wenn die Korngröße des zugesetzten Zirkondioxid- oder Hafniumdioxid-Pulvers 3-fach bis 10-fach kleiner ist, als die Korngröße des Molybdändisilizid- bzw. Siliziumnitrid-Pulvers.

Im übrigen ist es vorteilhaft, wenn das zugegebene Zirkondioxid oder Hafniumdioxid in tetragonaler oder kubischer Modifikation vorliegt, die bei Bedarf auch durch Zusatz eines Metalles, bevorzugt Yttrium oder Calcium, stabilisiert werden kann.

Der erhaltene, gesinterte keramische Verbundkörper ist vorteilhaft bis Temperaturen von 1300°C langzeitglühstabil und zumindest weitgehend frei von Zirkonnitrid oder Hafniumnitrid, dessen unerwünschte Bildung zu einer Erhöhung der Leitfähigkeit und einer Verringerung des Wärmeausdehnungskoeffizienten in dem jeweiligen Leit- bzw. Isolierbereich führte.

Eine weitere vorteilhafte Ausgestaltung der Erfindung sieht vor, neben dem Isolierbereich auch dem Leitbereich Zirkondioxid und/oder Hafniumdioxid zuzusetzen, wobei bevorzugt dem Isolierbereich ein höherer ZrO₂- und/oder HfO₂-Anteil zugesetzt wird, als dem Leitbereich. Auf diese Weise wird zunächst eine Angleichung der Wärmeausdehnungskoeffizienten von Leit- und Isolierbereich erreicht, gleichzeitig jedoch auch im Leitbereich eine Erhöhung des Wärmeausdehnungskoeffizienten erzielt. Da weiter der Leitbereich vielfach zumindest bereichsweise zur elektrischen Kontaktierung mit einem Metall bzw. einem metallischen Kontakt (Metall-Keramik-Verbindung) versehen ist, und Metalle bekanntermaßen vielfach höhere Wärmeausdehnungskoeffizienten als Keramiken aufweisen, kann diese Erhöhung des Wärmeausdehnungkoeffizienten im Leitbereich gleichzeitig zur Verbesserung der Eigenschaften der Kontaktierung, insbesondere hinsichtlich Langzeitstabilität, Temperaturwechselbeständigkeit und elektrischer Leitfähigkeit der Metall-Keramik-Verbindung, eingesetzt werden. Auf diese Weise wird somit vorteilhaft eine zumindest teilweise Anpassung, d.h. zumindest eine Verminderung der Unterschiede, der Wärmeausdehnungskoeffizienten von Leitbereich, Isolierbereich und Metallkontakt erreicht.

Im übrigen kann es für spezielle Anwendungen des erfindungsgemäßen Verbundkörpers wie beispielsweise Hochtemperatur-Schutzschalter oder Sicherungen auch zweckmäßig sein, zumindest bereichsweise lediglich dem Leitbereich Zirkondioxid und/oder Hafniumdioxid zuzusetzen, und damit dort eine gezielte Vergrößerung der Differenz der Wärmeausdehnungskoeffizienten von Leitbereich und Isolierbereich zu erzeugen.

### Zeichnung

Die Erfindung wird anhand der Zeichnung und in der nachfolgenden Beschreibung näher erläutert.

Die Figur zeigt ein Heizelement einer an sich bekannten keramischen Glühstiftkerze.

### Beschreibung der Ausführungsbeispiele

Die Figur zeigt ein Heizelement 10 einer an sich bekannten Glühstiftkerze mit einem gesinterten keramischen Verbundgefüge mit einem strukturierten Leitbereich 11 und einem strukturierten Isolierbereich 12. Der Leitbereich 11 ist dabei zumindest weitgehend elektrisch leitend, der Isolierbereich 12 zumindest weitgehend elektrisch isolierend.

Zur Herstellung des den späteren Leitbereich 11 des Heizelementes 10 bildenden keramischen Rohmaterials werden zunächst 60 Gew.% Molybdändisilizid und 40 Gew.% Siliziumnitrid zusammen mit Sinteradditiven in an sich bekannter Weise zu einem ersten keramischen Rohmaterial verarbeitet.

Weiterhin wird zur Bildung des späteren Isolierbereichs 12 ein zweites keramisches Rohmaterial hergestellt, das zu 40 Gew.% aus Molybdändisilizid, zu 40 Gew.% aus Siliziumnitrid, zu 20 Gew.% aus Zirkondioxid sowie weiter aus an sich bekannten Sinteradditiven besteht. Anstelle von Zirkondioxid eignet sich auch Hafniumdioxid.

Zum Vergleich wurde weiterhin ein Probegefüge hergestellt, das aus einem dritten keramischen Rohmaterial gesintert wurde, das zu 40 Gew.% aus Molydändisilizid, zu 60 Gew.% Siliziumnitrid sowie Sinteradditiven besteht.

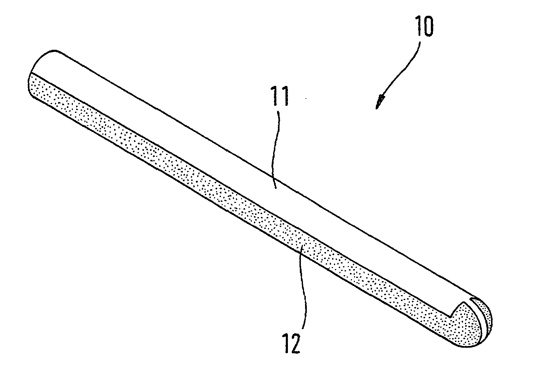

Die derart vorbereiteten, einzelnen keramischen Rohmaterialien für den Leitbereich 11 und den Isolierbereich 12 werden danach in an sich bekannter Weise zu dem Heizelement 10 gemäß Figur 1 geformt und strukturiert, und schließlich in an sich bekannter Weise gesintert, so daß ein keramisches Verbundgefüge entsteht.

Die Tabelle zeigt einen Vergleich der Eigenschaften der Materialien des Leitbereiches 11, des Isolierbereiches 12 und des Probegefüges nach dem Sintern. Man erkennt daraus, daß durch die Zugabe von Zirkondioxid zu dem zweiten keramischen Rohmaterial des Isolierbereiches 12 dessen Wärmeausdehnungskoeffizient nach dem Sintern nahezu gleich dem Wärmeausdehnungskoeffizienten des Materials des Leitbereiches 11 nach dem Sintern ist.

Zur Bestimmung der Oxidationsbeständigkeit gemäß nachstehender Tabelle wurde dabei die Gewichtszunahme pro Flächeneinheit in Prozent bei einer Auslagerungstemperatur von 1300°C an Luft nach 100 h gemessen.

| | keramisches Verbundgefüge im Leitbereich 11 | keramisches Verbund-gefüge im Isolierbereich 12 | Probegefüge (Vergleichs-messung ohne ZrO₂) |
|---|---|---|---|
| Dichte (% der theoretischen Dichte) | 93% | 94,8% | 94,8% |
| spezif. elektr. Widerstand [Ω cm] | 0,001 | > 10000 | > 10000 |
| Oxidationsbeständigkeit | 0,297 % | 0,437 % | 0,495 % |
| Wärmeausdehnungskoeffizient [1/K] | 4,87 + 0,0006*T | 4,75 + 0,0008*T | 3,47 + 0,00012*T |
| Zusammensetzung [Gew.%] | 60 % MoSi₂/ 40 % Si₃N₄ | 40 % MoSi₂/ 40 % Si₃N₄/ 20 % ZrO₂ | 40 % MoSi₂/ 60 % Si₃N₄ |

Die eingesetzten keramischen Rohmaterialien für den Leitbereich 11 und den Isolierbereich 12 lagen im übrigen jeweils als pulverförmige Ausgangsstoffe vor, wobei die Korngröße des pulverförmigen Siliziumnitrids zwischen 200 nm bis 10 µm, insbesondere 400 nm bis 5 µm, die Korngröße des pulverförmigen Molybdändisilizids zwischen 200 nm bis 10 µm, insbesondere 500 nm bis 7 µm, und die Korngröße des pulverförmigen Zirkondioxids oder Hafniumdioxids zwischen 50 nm und 5 µm, insbesondere 200 nm bis 1 µm, lag.

## Patentansprüche

1. Gesinterter keramischer Verbundkörper, insbesondere Heizelement (10), mit einem keramischen Verbundgefüge mit mindestens einem Leitbereich (11) und mindestens einem Isolierbereich (12), wobei das keramische Rohmaterial des Leitbereiches (11) und des Isolierbereiches (12) vor dem Sintern Siliziumnitrid und Molybdändisilizid enthält, **dadurch gekennzeichnet, daß** zumindest bereichsweise dem keramischen Rohmaterial des Leitbereiches (11) und/oder des Isolierbereiches (12) Zirkondioxid und/oder Hafniumdioxid zugesetzt ist.

2. Verbundkörper nach Anspruch 1, **dadurch gekennzeichnet, daß** dem keramischen Rohmaterial des Leitbereiches (11) oder dem keramischen Rohmaterial des Leitbereiches (11) und des Isolierbereiches (12) ZrO₂ und/oder HfO₂ derart zugesetzt ist, daß der Wärmeausdehnungskoeffizient des Leitbereiches (11) dem Wärmeausdehnungskoeffizienten des Isolierbereiches (12) zumindest weitgehend, insbesondere im Temperaturbereich von 20°C bis 1300°C, angepaßt ist.

3. Verbundkörper nach Anspruch 1 oder 2, **dadurch gekennzeichnet, daß** dem keramischen Rohmaterial des Leitbereiches (11) und/oder des Isolierbereiches (12) ZrO₂ und/oder HfO₂ in einer Menge von 5 bis 35 Gew.%, insbesondere 15 bis 20 Gew.%, zugesetzt ist.

4. Verbundkörper nach mindestens einem der vorangehenden Ansprüche, **dadurch gekennzeichnet, daß** lediglich dem keramischen Rohmaterial des Isolierbereiches (12) ZrO₂ und/oder HfO₂ zugesetzt ist.

5. Verbundkörper nach mindestens einem der vorangehenden Ansprüche, **dadurch gekennzeichnet, daß** das keramische Rohmaterial des Leitbereiches (11) und/oder des Isolierbereiches (12) pulverförmig ist.

6. Verbundkörper nach mindestens einem der vorangehenden Ansprüche, **dadurch gekennzeichnet, daß** das keramische Rohmaterial des Leitbereiches (12) und/oder des Isolierbereiche (12) eine metallorganische Precursorsubstanz ist.

7. Verbundkörper nach mindestens einem der vorangehenden Ansprüche, **dadurch gekennzeichnet, daß** das keramische Rohmaterial des Leitbereiches (11) und/oder des Isolierbereiches (12) eine Mischung aus pulverförmigem Siliziumnitrid, pulverförmigem Molybdändisilizid und pulverförmigem ZrO₂ und/oder HfO₂ enthält, wobei die Korngröße des ZrO₂-Pulvers und/oder des HfO₂-Pulvers kleiner als die Korngröße des Molybdändisilizid-Pulvers und des Siliziumnitrid-Pulvers ist.

8. Verbundkörper nach Anspruch 7, **dadurch gekennzeichnet, daß** die Korngröße des ZrO₂-Pulvers und/oder des HfO₂-Pulvers kleiner, insbesondere 3-fach bis 10-fach kleiner, als die Korngröße des Molybdändisilizid-Pulvers und des Siliziumnitrid-Pulvers ist

9. Verbundkörper nach mindestens einem der vorangehenden Ansprüche, **dadurch gekennzeichnet, daß** das Zirkondioxid und/oder das Hafniumdioxid in tetragonaler oder kubischer, insbesondere durch Zusatz eines Metalles wie Yttrium oder Calzium stabilisierter Modifikation, vorliegt.

10. Verbundkörper nach mindestens einem der vorangehenden Ansprüche, **dadurch gekennzeichnet, daß** das pulverförmige Siliziumnitrid eine Korngröße von 200 nm bis 10 µm, das pulverförmige Molybdändisilizid eine Korngröße von 200 nm bis 10 µm, und das pulverförmige ZrO₂ oder HfO₂ eine Korngröße von 50 nm bis 5 µm aufweist.

11. Verbundkörper nach mindestens einem der vorangehenden Ansprüche, **dadurch gekennzeichnet, daß** der Leitbereich (11) elektrisch leitfähig und der Isolierbereich (12) elektrisch zumindest weitgehend isolierend ist.

12. Verbundkörper nach mindestens einem der vorangehenden Ansprüche, **dadurch gekennzeichnet, daß** die elektrische Leitfähigkeit des Leitbereiches (11) und des Isolierbereiches (12) durch den jeweiligen Gewichtsanteil an Molybdändisilizid und/oder Siliziumnitrid einstellbar ist.

13. Verbundkörper nach mindestens einem der vorangehenden Ansprüche, **dadurch gekennzeichnet, daß** der Leitbereich (11) einen höheren Anteil an Molybdändisilizid enthält als der Isolierbereich (12).

14. Verbundkörper nach mindestens einem der vorangehenden Ansprüche, **dadurch gekennzeichnet, daß** die Dichte des gesinterten Verbundkörpers größer als 93% der theoretisch erreichbaren Dichte ist.

## Claims

1. Sintered ceramic composite body, in particular heating element (10), having a ceramic composite structure with at least one conductive region (11) and at least one insulating region (12), the ceramic raw material of the conductive region (11) and of the insulation material (12) prior to the sintering containing silicon nitride and molybdenum disilicide, **characterized in that** zirconium dioxide and/or hafnium dioxide is added at least in regions to the ceramic raw material of the conductive region (11) and/or the insulating region (12).

2. Composite body according to Claim 1, **characterized in that** ZrO₂ and HfO₂ is added to the ceramic raw material of the conductive region (11) or to the ceramic raw material of the conductive region (11) and of the insulation region (12) in such a manner that the coefficient of thermal expansion of the conductive region (11) is at least substantially matched, in particular in the temperature range from 20°C to 1300°C, to the coefficient of thermal expansion of the insulation region (12).

3. Composite body according to Claim 1 or 2, **characterized in that** ZrO₂ and/or HfO₂ is added to the ceramic raw material of the conductive region (11) and/or the insulation region (12) in an amount of 5 to 35% by weight, in particular 15 to 20% by weight.

4. Composite body according to at least one of the preceding claims, **characterized in that** ZrO₂ and/or HfO₂ is only added to the ceramic raw material of the insulation region (12).

5. Composite body according to at least one of the preceding claims, **characterized in that** the ceramic raw material of the conductive region (11) and/or of the insulation region (12) is in powder form.

6. Composite body according to at least one of the preceding claims, **characterized in that** the ceramic raw material of the conductive region (11) and/or of the insulation region (12) is a metalorganic precursor substance.

7. Composite body according to at least one of the preceding claims, **characterized in that** the ceramic raw material of the conductive region (11) and/or of the insulation region (12) contains a mixture of pulverulent silicon nitride, pulverulent molybdenum disilicide and pulverulent ZrO₂ and/or HfO₂, the grain size of the ZrO₂ powder and/or of the HfO₂ powder being smaller than the grain size of the molybdenum disilicide powder and of the silicon nitride powder.

8. Composite body according to Claim 7, **characterized in that** the grain size of the ZrO₂ powder and/or of the HfO₂ powder is smaller, in particular 3 to 10 times smaller, than the grain size of the molybdenum disilicide powder and of the silicon nitride powder.

9. Composite body according to at least one of the preceding claims, **characterized in that** the zirconium dioxide and/or the hafnium dioxide is present in tetragonal or cubic modification, stabilized in particular by the addition of a metal, such as yttrium or calcium.

10. Composite body according to at least one of the preceding claims, **characterized in that** the pulverulent silicon nitride has a grain size of 200 nm to 10 µm, the pulverulent molybdenum disilicide has a grain size of 200 mm to 10 µm, and the pulverulent ZrO₂ or HfO₂ has a grain size of 50 nm to 5 µm.

11. Composite body according to at least one of the preceding claims, **characterized in that** the conductive region (11) is electrically conductive and the insulation region (12) is at least substantially electrically insulating.

12. Composite body according to at least one of the preceding claims, **characterized in that** the electrical conductivity of the conductive region (11) and of the insulation region (12) can be set by means of the particular content by weight of molybdenum disilicide and/or silicon nitride.

13. Composite body according to at least one of the preceding claims, **characterized in that** the conductive region (11) contains a higher level of molybdenum disilicide than the insulation region (12).

14. Composite body according to at least one of the preceding claims, **characterized in that** the density of the sintered composite body is greater than 93% of the density which can theoretically be achieved.

## Revendications

1. Corps composite en céramique frittée, en particulier élément chauffant (10) présentant une structure composite céramique qui comprend au moins une zone conductrice (11) et au moins une zone isolante (12), la matière première céramique de la zone conductrice (11) et celle de la zone isolante (12) contenant avant le frittage du nitrure de silicium et du siliciure de molybdène,
**caractérisé en ce que**
du dioxyde de zirconium et/ou du dioxyde d'hafnium sont ajoutés au moins par endroit à la matière première céramique de la zone conductrice (11) et/ou de la zone isolante (12).

2. Corps composite selon la revendication 1,
**caractérisé en ce que**
du ZrO₂ et du HfO₂ est ou sont ajouté(s) à la matière première céramique de la zone conductrice (11) ou à la matière première céramique de la zone conductrice (11) et de la zone isolante (12) de telle manière que le coefficient de dilatation thermique de la zone conductrice (11) soit adapté au moins dans une large mesure, au coefficient de dilatation thermique de la zone isolante (12), en particulier dans l'intervalle de température de 20 °C à 1300 °C.

3. Corps composite selon la revendication 1 ou 2,
**caractérisé en ce que**
du ZrO₂ et du HfO₂ est ou sont ajouté(s) à la matière première céramique de la zone conductrice (11) et/ou à celle de la zone isolante (12), en une quantité de 5 à 35 % en poids, en particulier de 15 à 20 % en poids.

4. Corps composite selon au moins une des revendications précédentes,
**caractérisé en ce que**
du ZrO₂ et/ou du HfO₂ est ou sont ajouté(s) uniquement à la matière première céramique de la zone isolante (12).

5. Corps composite selon au moins une des revendications précédentes,
**caractérisé en ce que**
la matière première céramique de la zone conductrice (11) et/ou de la zone isolante (12) est ou sont pulvérulente(s).

6. Corps composite selon au moins une des revendications précédentes,
**caractérisé en ce que**
la matière première céramique de la zone conductrice (12) et/ou de la zone isolante (12) est un précurseur organométallique.

7. Corps composite selon au moins une des revendications précédentes,
**caractérisé en ce que**
la matière première céramique de la zone conductrice (11) et/ou de la zone isolante (12) contient un mélange de nitrure de silicium pulvérulent, de siliciure de molybdène pulvérulente et de ZrO₂ et/ou de HfO₂ pulvérulents, la grosseur de grain de la poudre de ZrO₂ et/ou de la poudre de HfO₂ étant plus petite que la grosseur de grain de la poudre de siliciure de molybdène et de la poudre de nitrure de silicium.

8. Corps composite selon la revendication 7.
**caractérisé en ce que**
la grosseur de grain de la poudre de ZrO₂ et/ou de la poudre de HfO₂ est en particulier 3 fois à 10 fois plus petite que la grosseur de grain de la poudre de siliciure de molybdène et de la poudre de nitrure de silicium.

9. Corps composite selon au moins une des revendications précéden tes,
**caractérisé en ce que**
le dioxyde de zirconium et/ou le dioxyde d'hafnium est ou sont présent(s) dans la variété tétragonale ou cubique, en particulier stabilisée par addition d'un métal tel que l'yttrium ou le calcium.

10. Corps composite selon au moins une des revendications précéden tes,
**caractérisé en ce que**
le nitrure de silicium pulvérulent possède une grosseur de grain de 200 nm à 10 µm, le siliciure de molybdène pulvérulent une grosseur de grain de 200 nm à 10 µm et le ZrO₂ ou le HfO₂ pulvérulent une grosseur de grain de 50 nm à 5 µm.

11. Corps composite selon au moins une des revendications précédentes,
**caractérisé en ce que**
la zone conductrice (11) est conductrice de l'électricité et la zone isolante (12) est au moins largement isolante de l'électricité.

12. Corps composite selon au moins une des revendications précédentes,
**caractérisé en ce que**
la conductibilité électrique de la zone conductrice (11) et de la zone isolante (12) peut être ajustée par la teneur en poids de chacune en siliciure de molybdène et/ou en nitrure de silicium.

13. Corps composite selon au moins une des revendications précédentes,
**caractérisé en ce que**
la zone conductrice (11) contient une plus forte proportion de siliciure de molybdène que la zone isolante (12).

14. Corps composite selon au moins une des revendications précédentes,
**caractérisé en ce que**
la densité du corps composite fritté est supérieure à 93 % de la densité théoriquement possible.
